Europäisches Patentamt

European Patent Office

Office européen des brevets

(11) Numéro de publication : **0 517 609 B1**

(12) **FASCICULE DE BREVET EUROPEEN**

(45) Date de publication du fascicule du brevet :
**27.12.95 Bulletin 95/52**

(51) Int. Cl.⁶ : **G06F 13/376**

(21) Numéro de dépôt : **92401564.7**

(22) Date de dépôt : **05.06.92**

(54) **Procédé et bus d'arbitrage pour transmission de données série**

(30) Priorité : **05.06.91 FR 9106809**

(43) Date de publication de la demande :
**09.12.92 Bulletin 92/50**

(45) Mention de la délivrance du brevet :
**27.12.95 Bulletin 95/52**

(84) Etats contractants désignés :
**BE DE GB IT**

(56) Documents cités :
**EP-A- 0 022 170**
**WO-A-86/03925**
**US-A- 4 063 220**
**US-A- 4 667 192**
**IEEE TRANSACTIONS ON CONSUMER ELEC-TRONICS vol. CE-31, no. 4, Novembre 1985, NEW YORK, US pages 687-698; R. MITCHELL ET AL.: 'An integrated serial bus architecture: principles and applications'**
**YORK, US pages 687 - 698; R.MITCHELL ET AL.: 'An integrated serial bus architecture: principles and applications'**

(73) Titulaire : **AEG SCHNEIDER AUTOMATION**
**4, rue de Longchamp**
**F-75016 Paris (FR)**

(72) Inventeur : **Aguilhon, Bernard**
**Avenue du Docteur Lefebvre,**
**Rés. Super Vaugrenier**
**F-06270 Villeneuve-Loubet (FR)**
Inventeur : **Doucet, René**
**Lumbin**
**F-38660 Le Touvet (FR)**
Inventeur : **Karcher, Jean-François**
**15 traverse du Barri,**
**Garbejaire**
**F-06560 Valbonne (FR)**

(74) Mandataire : **Carias, Alain et al**
**Schneider Electric SA**
**Direction Propriété Industrielle**
**33 bis, avenue du Maréchal Joffre**
**F-92002 Nanterre Cédex (FR)**

## Description

La présente invention concerne d'une façon générale la transmission de données sur ligne série entre une pluralité de stations émettrices et/ou réceptrices, notamment mais non exclusivement pour des bus ou réseaux locaux industriels ou analogues.

On connaît déjà des bus ou réseaux de transmission série à accès aléatoire et détection de collision dits CSMA/CD, dans lesquels la liaison physique entre les stations est assurée par une ligne série. Ces réseaux gèrent l'attribution de la ligne série à l'aide de moyens d'arbitrage destinés à résoudre les conflits entre plusieurs stations qui demandent la ligne sensiblement au même instant. Ainsi le réseau CSMA/CD dit "Ethernet" utilise une ligne commune à la fois pour l'arbitrage de la ligne et pour la circulation des données.

Ce système et les systèmes analogues présentent cependant pour inconvénient majeur une perte de temps en cas de collision entre deux stations ayant tenté d'émettre des données au même moment; il est alors en effet nécessaire d'éliminer les trames perturbées par la collision et d'effectuer une attribution du réseau avant que les échanges puissent être repris, et toutes les trames éliminées doivent être ré-émises. Le débit des données numériques échangées chute donc brutalement lorsqu'il existe de nombreux conflits d'accès.

La présente invention a pour but de gérer l'attribution de la ligne série en temps masqué par rapport aux échanges de données effectués sur cette ligne, en évitant en cas de collision d'éliminer les trames en interférence et de répéter l'échange perturbé.

Elle vise aussi à coordonner de manière simple le transfert de données et le processus d'arbitrage, et à garantir l'attribution rapide de la ligne série à toutes les stations requérantes.

Elle concerne à cet effet un procédé d'arbitrage pour l'accès à une voie d'échange de données série à laquelle sont reliées plusieurs stations, la voie de données pouvant prendre un état actif et un état inactif, caractérisé en ce qu'il est mis en oeuvre sur une voie d'arbitrage spécifique sous forme d'une ligne d'arbitrage série à contention reliant les différentes stations et définissant un état dominant et un état récessif, et en ce que chaque station souhaitant l'attribution de la voie de données

- émet sur la voie d'arbitrage, d'une manière conditionnée par l'état de la voie de données, une trame d'arbitrage comportant des bits qui définissent une priorité d'accès,
- lit, après un délai prédéterminé faisant suite à l'émission de chaque bit, la valeur de bit présente sur la voie d'arbitrage,
- cesse l'émission de la trame d'arbitrage dès que la valeur de bit lue est différente de la valeur du bit correspondant émis, de telle sorte qu'à la fin de la trame d'arbitrage, seule une station n'a pas cessé d'émettre et est habilitée à accéder à la voie de données.

De façon préférée, les émissions des trames d'arbitrage par des stations requérantes en collision sont synchronisées entre elles par le début de la trame émise en premier par une station; de plus, le début d'une trame d'arbitrage est synchronisé par rapport à un début d'activité de la ligne d'échange de données, et ce grâce à un canal délimiteur de la voie de données.

Une priorité tournante peut avantageusement être établie entre différentes catégories de trafic sur la ligne de données, et ce grâce à un signal pouvant être élaboré dans chaque station pour modifier le champ de priorité dans la trame d'arbitrage.

Afin d'éviter qu'en cas de conflits répétés entre des stations ayant même niveau de priorité, l'accès au bus soit toujours donné à la même station, la trame d'arbitrage peut comporter en outre, entre le champ de priorité et le champ de numérotation, un champ de répétition qui permet à une station d'accroître temporairement son niveau de priorité.

La présente invention concerne également un bus selon la revendication 12 mettant en oeuvre le procédé selon l'invention.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :

la figure 1 illustre schématiquement un bus selon la présente invention avec plusieurs stations connectées,
les figures 2a et 2b illustrent un premier aspect du mécanisme d'arbitrage selon l'invention,
la figure 3 illustre un second aspect du mécanisme d'arbitrage conforme à l'invention, et
la figure 4 illustre un exemple du contenu d'une trame d'arbitrage utilisée selon l'invention.

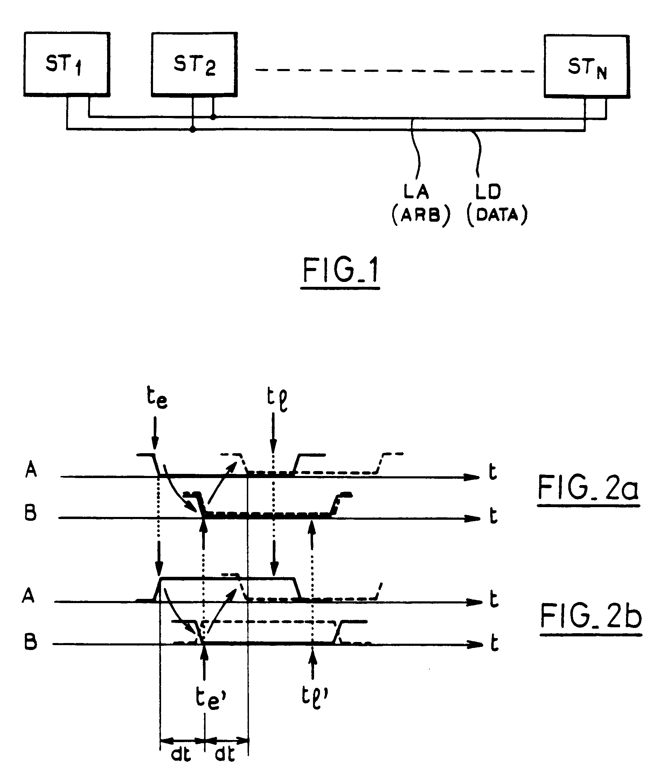

On a représenté sur la figure 1 plusieurs stations $ST_1$, $ST_2$, ... $ST_N$ destinées à échanger entre elles des données numériques, par exemple des variables et/ou des messages, par l'intermédiaire d'un bus. Les stations peuvent être connectées au bus via des réseaux de portes intégrés définissant la logique d'interface requise.

Le bus dans son aspect physique comprend une ligne d'arbitrage LA et une ligne de données LD, pour ainsi constituer deux voies série distinctes, mais coordonnées, dites voie d'arbitrage notée ARB et voie de données notée DATA. Sur ces deux voies fonctionnelles sont implémentés trois canaux physiques, à savoir un

2

canal d'arbitrage sur la voie ARB, et un canal délimiteur et un canal de données sur la voie DATA.

Le canal délimiteur présente deux états physiques "haut" et "bas" pour véhiculer deux états logiques, à savoir respectivement un état de repos et un état actif. Il donne l'enveloppe des séquences élémentaires de données - chaque séquence étant constituée par une succession de trames - pour synchroniser les voies ARB et DATA et assurer une bonne immunité du bus. Il transmet d'autre part à l'état actif une horloge générée par la station maîtresse du bus pour permettre aux stations consommatrices de séquences d'échantillonner le canal de données.

La voie ARB véhicule des trames dont chacune représente la requête d'attribution formulée par une station. Les bits des trames d'arbitrage sont transmis sous forme non codée, une tension nulle ou basse étant représentative d'un signal logique bas ou "0" tandis qu'une tension de +5 volts ou plus généralement une tension haute représente un signal logique haut ou "1".

Le débit de la voie DATA peut être typiquement de 12 Mbits/seconde. Sur la voie ARB, un débit élevé n'est pas nécessaire; en outre, le mécanisme de gestion des collisions décrit plus loin implique que chaque bit soit émis pendant une durée minimale liée au temps de propagation des signaux sur la voie.

L'arbitrage de l'accès au bus s'effectue en parallèle au flot de données, sans faire appel à un circuit gestionnaire de bus spécifique, mais avec une gestion des collisions au niveau de chaque station. On parlera dans toute la suite pour cette raison d'arbitrage "diffus".

La voie ARB présente deux états physiques: un état récessif et un état dominant. La position de repos (non émission par une station) correspond à l'état récessif. Dès qu'un seul module émet un état dominant, cet état se propage sur la voie ARB à la vitesse de propagation des signaux. Par convention, on supposera ici qu'un niveau physique bas sur la ligne d'arbitrage constitue l'état dominant, tandis que le niveau physique haut constitue l'état récessif. Ceci est obtenu aisément par exemple avec des sorties à collecteur ouvert au niveau de chaque station.

Lorsque des inverseurs logiques sont prévus aux interfaces entre les stations et le bus, l'état dominant correspond au niveau station à un niveau logique "1" et l'état récessif correspond à un niveau logique "0".

Pour chaque bit d'une trame d'arbitrage pour lequel le mécanisme de collision est fonctionnel, la station émettrice compare l'état émis avec l'état lu un instant plus tard sur la voie. Cet instant est déterminé en fonction du temps de propagation maximal des signaux sur la voie, lui-même fonction de la longueur de la ligne physique. De même, l'intervalle entre l'émission de deux bits consécutifs est choisi en fonction de ce temps de propagation.

On va décrire en référence aux figures 2a et 2b deux cas possibles de conflit entre des stations A et B. $t_e$ désigne l'instant auquel A émet un bit sur le bus, et $t_1$ l'instant auquel l'état du bus est lu par cette même station. $t_e'$ et $t_1'$ désignent les instants d'émission et de lecture au niveau de la station B. On suppose sur ces figures que A a émis une trame en premier et que B a émis une trame dès qu'elle a constaté, après un délai dt lié à la vitesse de propagation sur la ligne, que A procédait à une telle émission. B émet donc tous ses bits avec un retard dt par rapport à A. Les traits pleins indiquent les signaux émis et les traits tiretés indiquent les signaux reçus par chaque station.

Sur la figure 2a, les deux stations émettent un niveau bas dominant. Le bus est à l'état dominant au niveau de la station A à l'instant $t_1$ et au niveau de la station B à l'instant $t_1'$ et les deux stations détectent donc une identité entre un état émis et un état lu. La situation serait identique si les deux stations émettaient toutes les deux un niveau haut en étant seules émettrices: le bus resterait à l'état récessif.

Sur la figure 2b, A commence par émettre un niveau haut et, après l'intervalle dt, B émet un niveau bas. A l'instant $t_1$, le bus est passé au niveau bas, l'émission basse par B s'étant propagée jusque A comme l'illustrent les tiretés. A la station B, le niveau lu est bas du fait de l'émission par cette même station d'un niveau bas. Ainsi la station B constate l'identité de l'état émis et de l'état lu, tandis que la station A constate une différence entre l'état émis et l'état lu.

La station A qui constate une telle différence arrête immédiatement l'émission de sa trame d'arbitrage, tandis que la station B continue à émettre aussi longtemps que l'identité précitée, bit après bit, est vérifiée. La station qui interrompt son émission a perdu le droit de prendre la maîtrise du bus et devra renouveler sa demande. Au contraire, la station qui vérifie la concordance des états émis et lus jusqu'au dernier bit de la trame en collision se nomme maîtresse du bus.

En résumé, une station émettant sur le bus un bit haut pendant qu'au moins une autre station émet un bit bas se retire de la compétition.

Par ce mécanisme déterministe de détection de collisions, la voie d'arbitrage va pouvoir régler, sans recours à un gestionnaire spécifique, les problèmes d'attribution du bus aux différentes stations demanderesses.

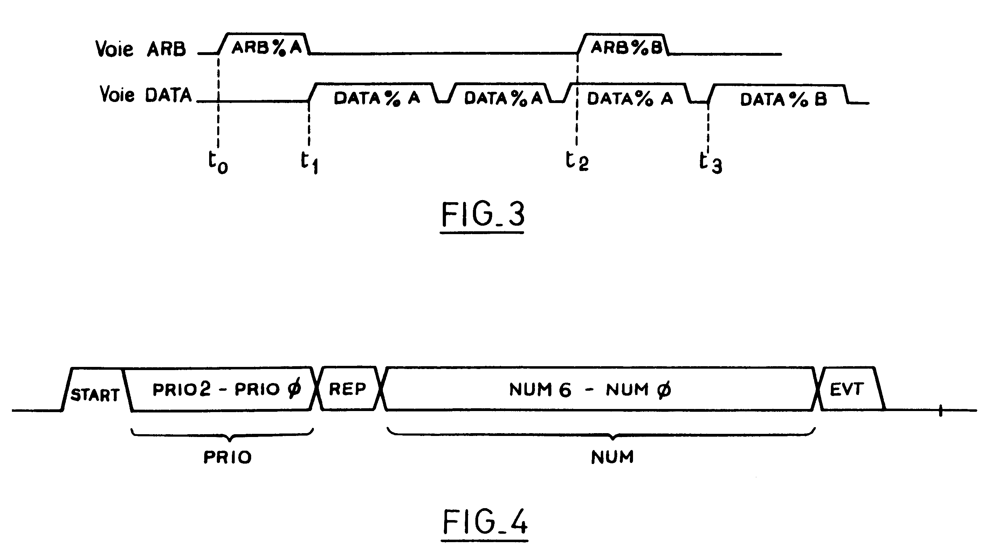

La figure 3 explicite le parallélisme entre la circulation des séquences de données sur la voie DATA et la circulation des trames d'arbitrage sur la voie ARB. Une station A commence par émettre sur la voie ARB, à un instant t0, une trame d'arbitrage notée ARB%A. En supposant qu'aucune autre station ne demande le bus, A devient maîtresse de la voie de données, puisque pour chaque bit l'état lu sur le bus est identique à l'état émis. Elle émet ensuite, à partir de l'instant t1, des séquences successives de données notées DATA%A, sans devoir réémettre de nouvelles trames ARB%A.

Lorsqu'à un instant t2, pendant l'émission par A d'une séquence DATA%A, une station B demande la ligne en émettant une trame d'arbitrage ARB%B (la synchronisation entre la circulation d'informations sur les voies ARB et DATA sera décrite plus loin), plusieurs cas peuvent être envisagés:

a) si A souhaite conserver la maîtrise du bus, elle émet dès la détection du début de la trame d'arbitrage émise par B une nouvelle trame d'arbitrage ARB%A. Les deux trames ARB%A et ARB%B se confrontent et la station qui bénéficie de la priorité la plus élevée l'emporte;

b) si A n'a plus de données à émettre, elle n'émet pas de nouvelle trame d'arbitrage. B prend la maîtrise du bus et va pouvoir, à l'issue de la dernière séquence DATA%A pendant laquelle l'arbitrage s'est effectué, émettre des séquences DATA%B (à partir de l'instant t3).

On constate que le processus d'arbitrage n'entraîne aucune élimination de trame de données ni répétition d'échange.

On a représenté sur la figure 4 une trame d'arbitrage ARB%. Celle-ci comprend en succession un bit de début START, un champ de priorité PRIO composé de trois bits PRIO2 à PRIO0, un bit dit de répétition REP, un champ de numérotation NUM composé de sept bits NUM6 à NUM0 et un bit EVT représentant une variable globale d'allocation de priorité cyclique/évènementiel. Bien entendu, les nombres et répartitions de bits peuvent varier sans sortir du cadre de l'invention. La longueur de chaque bit et le délai dt mentionné en référence aux figures 2a et 2b sont convenablement choisis en fonction de la vitesse de propagation sur la ligne et de la longueur de la ligne. La durée de chaque bit peut être d'environ 850 nS pour une longueur de bus de quelques dizaines de mètres, la durée d'une trame d'arbitrage étant alors de l'ordre de 12 uS. Les séquences de données peuvent avoir une durée de l'ordre de 10 à 40 uS, si bien que la gestion des collisions va pouvoir s'effectuer pratiquement sans déborder de cette séquence, donc sans perturbation du débit de données.

Le champ PRIO caractérise un niveau de priorité attribuable au type de trafic requis et il est élaboré par la station elle-même, au cas par cas, en fonction d'une valeur de priorité désirée $V_{PRIO}$ pour l'échange de données à effectuer et du paramètre EVT. Le champ NUM permet d'identifier, par exemple topologiquement, la station.

En préambule à la description des champs PRIO et EVT, on indiquera que, dans le présent exemple, les échanges sur le bus sont divisés en trois catégories:

- les échanges prioritaires (classe de trafic T0, avec par exemple quatre niveaux de priorité T00 à T03) qui correspondent à un certain nombre de liaisons pour lesquelles on désire obtenir un temps d'accès au bus rapide et déterministe;
- les échanges cycliques (classe de trafic T1 ou T2, choisie selon la valeur du paramètre EVT, avec pour chaque classe par exemple deux niveaux de priorité T10, T11 ou T20, T21) qui correspondent à tous les accès régulièrement demandés (par exemple pour des échanges réguliers de variables); et
- les échanges évènementiels (classe de trafic T2 ou T1, choisie selon la valeur du paramètre EVT) qui n'interviennent que de façon aléatoire. Il peut s'agir par exemple d'un service de messagerie.

Pour faire en sorte que:
- lorsqu'une station demande la maîtrise du bus pour un échange prioritaire, elle l'emporte systématiquement sur les autres types d'échanges;
- lorsque seuls des échanges cycliques sont demandeurs du bus, ceux-ci puissent utiliser la totalité de la bande passante du bus; et
- lorsque des stations demandent l'accès à la fois pour des échanges cycliques et pour des échanges évènementiels, chaque catégorie d'échange puisse utiliser jusqu'à la moitié de la bande passante du bus,
- il est prévu une priorité tournante d'accès au bus.

Cette priorité est gérée par la variable binaire globale EVT, qui change d'état systématiquement d'une trame d'arbitrage à la suivante. Suivant qu'EVT est à l'état récessif ou dominant (EVT=0 ou EVT=1), la priorité est attribuée aux échanges cycliques ou respectivement évènementiels.

Chaque trame émise par une station gagnante doit être telle que son champ EVT a la valeur inverse de celle de la trame gagnante immédiatement précédente. A cet effet, toutes les stations reliées au bus possèdent une bascule $B_{EVT}$ générant un signal de changement du niveau de priorité, dont l'état doit être en permanence l'image de la variable globale EVT. A cet effet, chaque station connectée au bus lit le contenu du champ EVT de chaque trame d'arbitrage gagnante et positionne sa bascule sur la valeur binaire inverse.

Lorsqu'une station doit émettre des données, elle déclare une valeur de priorité $V_{PRIO}$ comprise entre 0 et 7, avec les significations suivantes:

de 0 à 3 : quatre niveaux supérieurs de priorité, 0 représentant la priorité la plus haute;

de 4 à 7 : quatre niveaux de priorité pour des échanges cycliques/évènementiels, répartis en deux niveaux 4 et 5 pour des échanges cycliques et deux niveaux 6 et 7 pour des échanges évènementiels. Dans la pratique, les niveaux 4 et 6 peuvent être affectés à un trafic normal, les niveaux 5 et 7 étant affectés à un trafic de type "batch" (traitement par lots).

Les relations qui lient $V_{PRIO}$, la classe de trafic déterminée par le contenu de la bascule $B_{EVT}$ et la valeur effective du champ PRIO dans la trame d'arbitrage qui sera émise sont les suivants:

- dans le cas où EVT = 0 (trafic cyclique prioritaire):

| VPRIO | Classe de trafic | PRIO2-PRIO0 |
|---|---|---|
| 0 | T00 | 000 |
| 1 | T01 | 001 |
| 2 | T02 | 010 |
| 3 | T03 | 011 |
| 4 | T10 | 100 |
| 5 | T11 | 101 |
| 6 | T20 | 110 |
| 7 | T21 | 111 |

- dans le cas où EVT = 1 (trafic évènementiel prioritaire):

| VPRIO | Classe de trafic | PRIO2-PRIO0 |
|---|---|---|
| 0 | T00 | 000 |
| 1 | T01 | 001 |
| 2 | T02 | 010 |
| 3 | T03 | 011 |

. . . . . . . . . . . . . . . . . . . . . . . . . . . . .

Exemple 1

Une station A demande un échange cyclique (par exemple $V_{PRIO}$ = 4), un module B demande un échange évènementiel de type normal ($V_{PRIO}$ = 6) et un module C demande un échange évènementiel de type "batch" ($V_{PRIO}$ = 7). Pour la première collision de trames, les échanges cycliques sont prioritaires (EVT=0).

Les modules B et C doivent renouveler leur demande.

Au cours de la collision suivante entre les trames émises par B et C, les échanges évènementiels sont prioritaires (EVT=1) et B l'emporte.

Les échanges cycliques redeviennent ensuite prioritaires. C, étant alors la seule station à émettre une trame, prend la maîtrise du bus.

On va maintenant décrire en détail le rôle du bit REP qui selon son niveau permet de demander l'accès soit en mode normal, soit en mode répétition. L'objet du mode répétition est de garantir l'accès au bus de toutes les stations placées sous un même niveau de priorité. La mise de ce bit en mode répétition équivaut à accroître temporairement le niveau de priorité d'une station perdante par rapport aux stations de même niveau.

Les règles de gestion de ce bit sont les suivantes:

- au repos, le bit REP est en mode normal dans toutes les stations;
- le bit REP d'une station passe au mode répétition dès que celle-ci s'est vue refuser l'accès au bus, à cause d'une collision défavorable avec d'autres stations de même niveau de priorité et que le bit REP lu sur le bus est à l'état inactif (rep=0);

- le bit REP d'une station repasse en mode normal dès qu'elle obtient la maîtrise du bus.

Le champ de numérotation NUM sert à identifier chaque station pour départager les stations dotées de la même priorité PRIO, REP. Par exemple, dans le cas où le bus relie des modules reçus dans des bacs, les bits de poids fort de NUM peuvent représenter le numéro du bac, les bits de poids plus faible représentant le numéro du module dans le bac considéré.

Quand les champs PRIO et REP sont identiques dans deux trames conflictuelles émises simultanément par deux stations, les bits NUM6-NUM0 départagent ces stations, la station élue étant celle qui présente l'identificateur NUM le plus faible. Les stations ayant des identificateurs NUM tous différents, il existe à chaque collision un seul vainqueur.

### Exemple 2

Pour illustrer un conflit entre station, on suppose que la priorité est au trafic cyclique (EVT=0) et que quatre stations, numérotées 0,1,2 et 3 en notation décimale, souhaitent simultanément prendre la maîtrise du bus, que la station N°2 bénéficie d'une priorité de niveau 4 et que les stations N°0,1 et 3 bénéficient d'une même priorité de niveau 5.

Lors de la collision initiale, la station N°2 l'emporte. Les autres stations doivent réitérer leur demande et le font en mode normal (REP=1).

Lors du conflit suivant, EVT=1 et les trois trames en présence ont même priorité; l'attribution du bus s'effectue par le champ NUM, avec priorité à l'identificateur le plus bas et donc à la station N°0. Le niveau de priorité étant le même pour toutes les trames, les stations N°1 et 3 passent en mode répétition (REP=0). Et si une autre station vient alors demander un accès sous la même priorité, la station N°1 l'emporte par son bit REP dominant, qui précède le champ NUM, et l'emportera sur la station N°3 par son champ NUM inférieur.

Au sein même des trames de données, on peut utiliser les techniques conventionnelles d'échange de données, notamment de variables et/ou de messages, associant aux données proprement-dites, dans un préambule approprié, soit un identificateur de donnée (cas d'une variable), soit encore un champ d'adresses, incluant l'adresse de l'émetteur et l'adresse du destinataire (cas d'un message).

On va décrire brièvement ci-dessous la synchronisation des voies ARB et DATA.

Une station connectée au bus doit pouvoir reconnaître de façon rapide et sûre les trames ARB et DATA des échanges en cours.

De façon préférée, tous les échanges sont synchronisés par les signaux sur la voie DATA, écoutée en permanence par l'ensemble des stations. Cette synchronisation s'effectue par détection d'activité sur le canal délimiteur. Lorsque le canal délimiteur est inactif, la voie DATA est au repos. Le principe de synchronisation utilisé réside en ce que, entre deux séquences de données consécutives, le canal délimiteur doit passer par l'état inactif pendant une durée suffisante pour permettre à toutes les stations de détecter cet état.

Par ailleurs, une station désirant prendre la maîtrise du bus doit pouvoir également se synchroniser sur la voie ARB, afin de savoir à quel moment émettre une trame d'arbitrage. A cet effet, la règle consiste en ce qu'une trame d'arbitrage ne doit pas être en cours de transmission lorsqu'une séquence de données débute sur la voie DATA. En conséquence, à la détection d'un début de séquence sur la voie DATA, la voie ARB est nécessairement au repos.

La station qui a la maîtrise du bus doit s'assurer que la voie ARB est au repos avant de débuter l'envoi d'une séquence sur la voie DATA. Pour chacune des autres stations, si elle détecte le début d'une séquence de données sur la voie DATA pendant qu'elle émet une trame d'arbitrage, elle arrête immédiatement l'émission de cette trame et renouvelle sa demande ultérieurement.

Bien que l'on utilise ici le terme "bus" pour désigner la ligne reliant les différentes stations, il est clair que ce terme n'est pas à interpréter de façon limitative, l'invention s'appliquant à la fois aux bus et aux réseaux. Elle s'applique généralement à tout environnement dans lequel des stations délocalisées doivent pouvoir échanger des données numériques sur des lignes de longueurs modérées.

## Revendications

1. Procédé d'arbitrage pour l'accès à une voie d'échange de données série à laquelle sont reliées plusieurs stations (ST1-STN), la voie de données pouvant prendre un état actif et un état inactif, caractérisé en ce qu'il est mis en oeuvre sur une voie d'arbitrage spécifique (ARB) sous forme d'une ligne d'arbitrage série à contention reliant les différentes stations et définissant un état dominant et un état récessif, et en ce que chaque station souhaitant l'attribution de la voie de données
   - émet sur la voie d'arbitrage, d'une manière conditionnée par l'état de la voie de données, une trame d'arbitrage (ARB%) comportant des bits qui définissent une priorité d'accès,
- lit, après un délai prédéterminé faisant suite à l'émission de chaque bit, la valeur de bit présente sur la voie d'arbitrage,
- cesse l'émission de la trame d'arbitrage dès que la valeur de bit lue est différente de la valeur du bit correspondant émis, de telle sorte qu'à la fin de la trame d'arbitrage, seule une station n'a pas cessé d'émettre et est habilitée à accéder à la voie de données.

2. Procédé selon la revendication 1, caractérisé en ce que:
- la trame d'arbitrage (ARB%) comporte un champ de priorité (PRIO) qui définit un niveau de priorité et un champ de numérotation (NUM) qui assure l'identification de chaque station, ces champs étant constitués d'un bit ou de plusieurs bits, et
- une station en collision cesse l'émission de sa trame d'arbitrage dès que la valeur de bit lue dans le champ de priorité et, en cas d'égal niveau de priorité, dans le champ de numérotation diffère de la valeur du bit correspondant émis.

3. Procédé selon la revendication 1 ou 2, caractérisé en ce que chaque station, pour émettre la trame d'arbitrage:
- reconnaît l'état actif ou inactif de la voie de données,
- si cette voie est à l'état actif, synchronise le début de la trame d'arbitrage par rapport à la mise en activité de la voie de données.

4. Procédé selon la revendication 3, caractérisé en ce que l'émission d'une trame d'arbitrage est interrompue quant une mise en activité de la voie de données survient au cours de cette émission.

5. Procédé selon l'une des revendications 1 à 4, caractérisé en ce que les trames d'arbitrage émises par des stations requérantes en collision sont synchronisées entre elles par au moins un champ de début (START) de la première trame émise.

6. Procédé selon l'une des revendications 1 à 5, caractérisé en ce qu'une station ayant accédé à la voie de données:
- si elle ne détecte pas de trame d'arbitrage émise par une autre station, garde la maîtrise de la voie de données sans émettre de nouvelle trame d'arbitrage,
- si elle détecte une trame d'arbitrage émise par une autre station, émet une trame d'arbitrage interférente.

7. Procédé selon l'une des revendications 2 à 5, caractérisé en ce que, entre deux trames d'arbitrage (ARB%) successives, on inverse dans chaque station l'état logique d'un signal de changement de niveau de priorité et en ce que, avant d'émettre une trame d'arbitrage, chaque station élabore le champ de priorité (PRIO) de la trame en fonction de l'état du signal et d'une valeur de priorité ($V_{PRIO}$) attribuée à l'échange de données requis.

8. Procédé selon la revendication 7, caractérisé en ce que, pour assurer l'identité des états logiques des signaux de changement de priorité de toutes les stations, chaque station émettant une trame d'arbitrage (ARB%) détermine l'état d'un champ (EVT) de cette trame en fonction de l'état de son propre signal, et chaque station lit l'état dudit champ de la trame émise par la station ayant accédé à la voie de données et détermine le nouvel état de son propre signal en fonction de l'état lu.

9. Procédé selon l'une des revendications 7 et 8, caractérisé en ce que des échanges de données cycliques et évènementiels peuvent avoir lieu et le changement d'état logique du signal de changement de priorité intervertit les niveaux de priorité d'échanges de données cycliques et respectivement évènementiels (T10, T11; T20, T21).

10. Procédé selon la revendication 9, caractérisé en ce qu'il est prévu également des échanges prioritaires présentant en permanence un niveau de priorité (T00-T03) plus élevé que les échanges cycliques et évènementiels.

11. Procédé selon l'une des revendications 1 à 10, caractérisé en ce que chaque trame d'arbitrage (ARB%) comporte un champ de répétition (REP) associé aux bits définissant la priorité d'accès et en ce qu'en cas de collision entre stations de même niveau de priorité, les stations perdantes ont leur champ de répétition modifié pour simuler une élévation du niveau de priorité jusqu'à ce qu'elles aient accédé à la voie de données.

12. Bus comportant plusieurs stations (ST1-STN) reliées par une voie d'échange de données numériques (DATA) pouvant prendre un état actif ou inactif, caractérisé en ce qu'il comprend, pour gérer l'accès des stations à la voie de données, des moyens d'arbitrage diffus sur une voie d'arbitrage (ARB) constituée par une ligne d'arbitrage série à contention définissant un état dominant et un état récessif, l'arbitrage diffus s'effectuant en parallèle au flot de données, nous faire appel à un circuit gestionnaire de bus spécifique, mais avec une gestion des collisions au niveau de chaque station, chaque station comprenant:
   - des moyens conditionnés par l'état de la voie d'échange de données, pour émettre sur la voie d'arbitrage une trame d'arbitrage (ARB%) comportant des bits (PRIO, REP, NUM) qui définissent une priorité d'accès lorsque la station souhaite l'attribution de la voie de données,
   - des moyens pour lire, après un délai prédéterminé faisant suite à l'émission de chaque bit, la valeur de bit présente sur la voie d'arbitrage, et pour interrompre l'émission de la trame d'arbitrage dès que la valeur de bit lue est différente de la valeur de bit émise, de telle sorte qu'à la fin de l'arbitrage, seule une station n'a pas cessé d'émettre et est habilitée à accéder à la voie de données.

13. Bus selon la revendication 12, caractérisé en ce que:
   - la trame d'arbitrage (ARB%) comporte un champ de priorité (PRIO) qui définit un niveau de priorité et un champ de numérotation (NUM) qui assure l'identification de chaque station, ces champs étant constitués d'un bit ou de plusieurs bits, et
   - les moyens d'interruption d'émission amènent une station à cesser l'émission de sa trame d'arbitrage dès que le valeur de bit lue dans le champ de priorité et, en cas d'égal niveau de priorité, dans le champ de numérotation diffère de la valeur du bit correspondant émis.

14. Bus selon la revendication 12 ou 13, caractérisé en ce que:
   - la voie de données comprend un canal physique de transfert de données et un canal physique délimiteur, ce dernier étant à l'état actif ou inactif selon qu'une séquence de données est transmise ou non sur le canal de données,
   - chaque station comporte des moyens de synchronisation agencés pour reconnaître l'état actif du canal délimiteur et synchroniser le début de la trame d'arbitrage émise par cette station par rapport à la mise en activité du canal délimiteur.

15. Bus selon la revendication 13 ou 14, caractérisé en ce que chaque station comporte une bascule ($B_{EVT}$), des moyens pour inverser l'état logique de la bascule entre deux trames d'arbitrage successives, et des moyens pour élaborer le champ de priorité (PRIO) de chaque trame d'arbitrage en fonction de l'état (EVT) de la bascule et d'une valeur de priorité ($V_{PRIO}$) attribuée à l'échange de données requis.

16. Bus selon la revendication 15, caractérisé en ce que, pour assurer l'identité des états logiques des bascules ($B_{EVT}$) de toutes les stations, chaque station comporte des moyens pour fixer l'état d'un champ (EVT) de la trame d'arbitrage en fonction de l'état de sa propre bascule, pour lire l'état du champ de la trame émise par la station ayant accédé à la voie de données et pour fixer un nouvel état de sa propre bascule en fonction de l'état lu.

17. Bus selon l'une des revendications 13 à 16, caractérisé en ce que chaque trame d'arbitrage (ARB%) comporte un champ de répétition (REP) associé au champ de priorité et en ce que chaque station comporte des moyens pour modifier l'état du champ de répétition en cas de collision entre stations de même niveau de priorité.

**Patentansprüche**

1. Arbitrierungsverfahren für den Zugriff zu einem seriellen Datenkanal, an dem mehrere DV-Geräte ST1-STN) angeschlossen sind, wobei der Datenkanal einen aktiven und einen inaktiven Zustand annehmen kann, dadurch gekennzeichnet, daß der Datenkanal in Form einer seriellen Arbitrierungsleitung mit Stillsetzung auf einem spezifischen Arbitrierungskanal (ARB) implementiert ist, welche die verschiedenen DV-Geräte miteinander verbindet, und alternativ einen dominanten oder einen rezessiven Zustand definiert, sowie dadurch, daß jedes DV-Gerät, das den Zugriff zum Datenkanal anfordert,
   - auf dem Arbitrierungskanal auf eine vom Zustand des Datenkanals bedingte Weise einen Arbitrierungsrahmen (ARB%) sendet, welcher Bits enthält, die eine Zugriffspriorität beinhalten,

- nach einer vorgegebenen Dauer nach dem Senden jedes einzelnen Bits den Bitwert des auf dem Arbitrierungskanal befindlichen Bits liest,
- das Senden des Arbitrierungsrahmens abbricht, sobald der gelesene Bitwert von dem entsprechenden gesendeten Bitwert abweicht, sodaß am Ende des Arbitrierungsrahmens nur ein DV-Gerät das Senden noch nicht beendet hat und somit den Zugriff zum Datenkanal erhält.

2. Arbitrierungsverfahren nach Patentanspruch 1, dadurch gekennzeichnet, daß
   - der Arbitrierungsrahmen (ARB%) ein Prioritätsfeld (PRIO), das eine Priorität definiert, sowie ein Numerierungsfeld (NUM), das die Identifizierung jedes angeschlossenen DV-Gerätes gewährleistet, besitzt, wobei diese beiden Felder aus einem oder mehreren Bits bestehen,
   - ein in Zugriffskollision geratenes DV-Gerät das Senden seines Arbitrierungsrahmens sofort unterbricht, sobald es feststellt, daß der im Prioritätsfeld und bei gleicher Prioritätsstufe der im Numerierungsfeld gelesene Bitwert von dem entsprehenden, von ihm gesendeten Bitwert abweicht.

3. Arbitrierungsverfahren nach Patentanspruch 1 oder 2, dadurch gekennzeichnet, daß jedes DV-Gerät zum Senden eines Arbitrierungsrahmens
   - den aktiven bzw. inaktiven Zustand des Datenkanals erkennt,
   - bei aktivem Zustand des Datenkanals den Beginn des Arbitrierungsrahmens in Bezug auf die Aktivierung des Datenkanals synchronisiert.

4. Arbitrierungsverfahren nach Patentanspruch 3, dadurch gekennzeichnet, daß das Senden eines Arbitrierungsrahmens unterbrochen wird, wenn bei diesem Senden eine Aktivierung des Datenkanals erfolgt.

5. Arbitrierungsverfahren nach Patentanspruch 1 bis 4, dadurch gekennzeichnet, daß die Arbitrierungsrahmen der beim Anfordern des Zugriffs zum Datenkanal in Kollision geratenen DV-Geräte untereinander mit mindestens einem Startbit (START) des ersten gesendeten Arbitrierungsrahmens synchronisiert werden.

6. Arbitrierungsverfahren nach Patentanspruch 1 bis 5, dadurch gekennzeichnet, daß ein DV-Gerät, das den Zugriff zum Datenkanal besitzt,
   - den Zugriff behält, ohne erneut Arbitrierungsrahmen zu senden, wenn es keinen von einem anderen DV-Gerät gesendeten Arbitrierungsrahmen erkennt,
   - beim Erkennen eines von einem anderen DV-Gerät gesendeten Arbitrierungsrahmens einen interferierenden Arbitrierungs-rahmen sendet.

7. Arbitrierungsverfahren nach Patentanspruch 1 bis 6, dadurch gekennzeichnet, daß bei zwei aufeinanderfolgenden Arbitrierungsrahmen (ARB%) in jedem DV-Gerät der logische Zustand eines Signals für den Wechsel der Prioritätsstufe umgeschaltet wird und jedes DV-Gerät vor dem Senden eines Arbitrierungsrahmens das Prioritätsfeld (PRIO) des Rahmens entsprechend dem Status des Signals sowie des dem gewünschten Datenaustausch zugewiesenen Prioritätswertes (VPRIO) erstellt.

8. Arbitrierungsverfahren nach Patentanspruch 7, dadurch gekennzeichnet, daß zur Identifizierung der logischen Zustände der Signale für den Wechsel der Prioritätsstufe aller angeschlossenen DV-Geräte jedes einen Arbitrierungs-rahmen (ARB%) sendende DV-Gerät den Status eines Feldes (EVT) dieses Rahmens je nach dem Zustand seines eigenen Signals erkennt und daß jedes DV-Gerät den Status des Feldes in dem Rahmen liest, der von dem DV-Gerät gesendet wurde, das den Zugriff zum Datenkanal besitzt und den Status seines eigenen Signals entsprechend dem gelesenen Status bestimmt.

9. Arbitrierungsverfahren nach Patentanspruch 7 oder 8, dadurch gekennzeichnet, daß zyklische und ereignisbezogene Daten ausgetauscht werden können und daß durch den Wechsel des logischen Status des Signals für die Prioritätsänderung die Prioritätsstufen für den Austausch von zyklischen bzw. ereignisbezogenen Daten T10, T11; T20, T21) umgekehrt werden.

10. Arbitrierungsverfahren nach Patentanspruch 9, dadurch gekennzeichnet, daß weiterhin auch der Austausch von prioritären Daten vorgesehen ist, der durchgehend eine höhere Prioritätsstufe (T00-T03) als der Austausch von zyklischen und ereignisbezogenen Daten besitzt.

**11.** Arbitrierungsverfahren nach Patentanspruch 1 bis 10, dadurch gekennzeichnet, daß jeder Arbitrierungsrahmen (ARB%) ein Repetitionsfeld (REP) besitzt, das den Bits zugeordnet ist, die die Zugriffspriorität bestimmen, und daß bei Zugriffskollision zwischen mehreren DV-Geräten mit derselben Prioritätsstufe bei den DV-Geräten, die den Zugriff nicht erhalten, das Repetitionsfeld dahingehend geändert wird, daß eine Erhöhung der Prioritätsstufe erfolgt, bis sie den Zugriff zum Datenkanal erhalten.

**12.** Datenbus mit mehreren über einen Datenaustauschkanal (DATA) für numerische Daten mit einander verbundenen DV-Geräten (ST1-STN), der einen aktiven oder inaktiven Zustand einnehmen kann, dadurch gekennzeichnet, daß er zum Ermöglichen des Zugriffs der DV-Geräte zum Datenkanal diffuse Arbitrierungsmittel auf einem Arbitrierungskanal (ARB) besitzt, der aus einer seriellen Arbitrierungsleitung mit Stillsetzung besteht, die einen dominanten und einen rezessiven Zustand bestimmt, wobei die diffuse Arbitrierung parallel zum Datenfluß erfolgt, ohne eines spezifischen Busverwaltungsprogramms zu bedürfen, jedoch mit einer Kollisionssteuerung bei jedem der DV-Geräte, wobei jedes DV-Gerät
   - in Abhängigkeit vom Zustand des Datenkanals definierte Mittel besitzt, um auf dem Arbitrierungskanal einen Arbitrierungsrahmen (ARB%) zu senden, welcher Bits (PRIO, REP, NUM) besitzt, durch die eine Priorität für den Zugriff des DV-Geräts zum Datenkanal festgelegt wird,
   - Mittel zum Lesen des auf dem Arbitrierungskanal vorhandenen Bitwertes mit einer vorgegebenen Verzögerung nach dem senden der einzelnen Bits sowie zum Unterbrechen des Sendens des Arbitrierungsrahmens sobald der gelesene Bitwert vom gesendeten Bitwert abweicht, sodaß am Ende der Arbitrierung nur noch ein DV-Gerät Arbitrierungsrahmen sendet und somit den Zugriff zum Datenkanal erhält.

**13.** Bus nach Patentanspruch 12, dadurch gekennzeichnet, daß
   - der Arbitrierungsrahmen (ARB%) ein Prioritätsfeld (PRIO), das eine Prioritätsstufe definiert, sowie ein Numerierungs-feld (NUM), das die Identifizierung jedes angeschlossenen DV-Gerätes gewährleistet, besitzt, wobei diese beiden Felder aus einem oder mehreren Bits bestehen, und
   - durch die Mittel zum Unterbrechen des Sendens ein DV-Gerät sofort das Senden seines Arbitrierungsrahmens unterbricht, sobald es erkennt, daß der in dem Prioritätsfeld und bei Geräten mit derselben Prioritätsstufe der im Numerierungs-feld gelesene Bitwert von dem entsprechenden gesendeten Bitwert abweicht.

**14.** Bus nach Patentanspruch 12 oder 13, dadurch gekennzeichnet, daß
   - der Datenkanal eine physische Datenübertragungsspur und eine physische Begrenzungsspur besitzt, wobei letztere je nachdem, ob eine Datenfolge auf der Datenspur übertragen wird, entweder aktiv oder inaktiv ist,
   - jedes DV-Gerät Mittel zur Synchronisierung besitzt, die so ausgelegt sind, daß sie den aktiven Zustand der Begrenzungsspur erkennen und den Beginn der Übertragung des Arbitrierungsrahmens durch dieses DV-Gerät mit dem Aktivwerden der Begrenzungsspur synchronisieren können.

**15.** Bus nach Patentanspruch 13 oder 14, dadurch gekennzeichnet, daß jedes DV-Gerät eine binäre Kippschaltung (BEVT), Mittel zur Umkehr des logischen Zustandes des Kippschaltung zwischen zwei aufeinanderfolgenden Arbitrierungsrahmen sowie Mittel zum Erstellen von Prioritätsfeldern (PRIO) für jeden Arbitrierungsrahmen in Abhängigkeit von dem Zustand (EVT) der Kippschaltung und eines dem gewünschten Datenaustausch zugeordneten Prioritätswertes (VPRIO) besitzt.

**16.** Bus nach Patentanspruch 15, dadurch gekennzeichnet, daß zur Identifizierung der logischen Zustände der binären Kippschaltungen (BEVT) aller DV-Geräte jedes DV-Gerät Mittel zum Bestimmen des Zustandes eines Feldes (EVT) des ArbitrierungsRahmens in Abhängigkeit vom Zustand seiner eigenen Kippschaltung besitzt, um den Zustand des Feldes des von dem den Zugriff zum Datenkanal besitzenden DV-Gerät gesendeten Arbitrierungsrahmens zu lesen und den Zustand seiner eigenen Kippschaltung in Abhängigkeit von dem so gelesenen Zustand zu bestimmen.

**17.** Bus nach Patentanspruch 13 bis 16, dadurch gekennzeichnet, daß jeder Arbitrierungsrahmen (ARB%) ein Repetitionsfeld (REP) besitzt, das dem Prioritätsfeld zugeordnet ist, und daß jedes DV-Gerät Mittel zum Ändern des Zustandes des Repetitionsfeldes im Falle einer Zugriffs-Kollision von DV-Geräten mit derselben Prioritätsstufe besitzt.

## Claims

1. Arbitration method for access to a serial data communication channel to which a plurality of stations (ST1-STN) are connected, the data channel assuming an active state or an inactive state, characterised in that it is implemented on a dedicated arbitration channel (ARB) in the form of a serial collision detection arbitration line connecting the various stations and defining a dominant state and a recessive state, and in that each station requiring allocation of the data channel:
   - sends on the arbitration channel, in a manner conditioned by the state of the data channel, an arbitration frame (ARB%) including bits which define an access priority,
   - reads, after a predetermined time-delay from the sending of each bit, the value of the bit present on the arbitration channel,
   - ceases to send the arbitration frame as soon as the value of the bit read is different from the value of the corresponding bit sent, so that at the end of the arbitration frame only one station has not ceased to send and is authorised to access the data channel.

2. Method according to claim 1 characterised in that:
   - the arbitration frame (ARB%) includes a priority field (PRIO) which defines a priority level and a number field (NUM) which identifies each station, these fields comprising one or more bits, and
   - a station in collision ceases to send its arbitration frame as soon as the bit value read in the priority field and, in the case of equal priorities, in the number field differs from the value of the corresponding bit sent.

3. Method according to claim 1 or claim 2 characterised in that each station, to send the arbitration frame:
   - recognises the active state or the inactive state of the data channel,
   - if said channel is in the active state, synchronises the start of the arbitration frame relative to activation of the data channel.

4. Method according to claim 3 characterised in that the sending of an arbitration frame is interrupted if activation of the data channel occurs during it.

5. Method according to any one of claims 1 to 4 characterised in that the arbitration frames sent by requesting stations in collision are synchronised by at least one start field (START) of the first frame sent.

6. Method according to any one of claims 1 to 5 characterised in that a station, having accessed the data channel:
   - if it does not detect any arbitration frame sent by another station, retains control of the data channel without sending any further arbitration frame,
   - if it detects an arbitration frame sent by another station, sends an interfering arbitration frame.

7. Method according to any one of claims 2 to 5 characterised in that, between two consecutive arbitration frames (ARB%), in each station the logic state of a change of priority signal is complemented and in that, before sending an arbitration frame, each station determines the priority field (PRIO) of the frame on the basis of the state of the signal and a priority value ($V_{PRIO}$) allocated to the required data traffic.

8. Method according to claim 7 characterised in that, to make the logic states of the priority change signals of all the stations the same, each station sending an arbitration frame (ARB%) determines the state of a field (EVT) of that frame on the basis of the state of its own signal, and each station reads the state of said field of the frame sent by the station that has accessed the data channel and determines the new state of its own signal as a function of the state read.

9. Method according to claim 7 or claim 8 characterised in that cyclic data traffic and event-related data traffic can take place and the change of logic state of the priority change signal complements the priority levels of cyclic data traffic and event-related data traffic (T10, T11; T20, T21).

10. Method according to claim 9 characterised in that there is also provision for priority traffic having at all times a higher priority (T00-T03) than cyclic traffic and event-related traffic.

11. Method according to any one of claims 1 to 10 characterised in that each arbitration frame (ARB%) includes a repeat field (REP) associated with the bits defining the access priority and in that in the event of a collision between stations having the same priority the repeat field of the losing stations is modified to simulate an increase in priority until they have accessed the data channel.

12. Bus including a plurality of stations (ST1-STN) connected by a digital data communication channel (DATA) that can assume an active state or an inactive state, characterised in that it comprises, for managing access of stations to the data channel, diffuse arbitration means on an arbitration channel (ARB) made up of a serial collision detection arbitration line defining a dominant state and a recessive state, diffuse arbitration being effected in parallel with the stream of data, without making use of any dedicated bus manager circuit, but with collision management at the level of each station, each station comprising:
- means conditioned by the state of the data traffic channel to send on the arbitration channel an arbitration frame (ARB%) including bits (PRIO, REP, NUM) which define an access priority if the station requires allocation of the data channel,
- means for reading, after a predetermined time-delay following on from the sending of each bit, the bit value present on the arbitration channel and for interrupting sending of the arbitration frame as soon as the bit value read is different from the bit value sent, so that at the end of arbitration only one station has not ceased to send and is authorised to access the data channel.

13. Bus according to claim 12 characterised in that:
- the arbitration frame (ARB%) includes a priority field (PRIO) which defines a priority level and a number field (NUM) which identifies each station, these fields comprising one or more bits, and
- the means for interrupting sending cause a station to cease sending its arbitration frame as soon as the bit value read in the priority field and, in the case of equal priorities, in the number field is different from the corresponding bit value sent.

14. Bus according to claim 12 or claim 13 characterised in that:
- the data channel comprises a physical data transfer channel and a physical delimiter channel, the latter being in the active state or the inactive state according to whether a data sequence is being transmitted or not on the data channel,
- each station includes synchronisation means adapted to recognise the active state of the delimiter channel and to synchronise the start of the arbitration frame sent by that station to activation of the delimiter channel.

15. Bus according to claim 13 or claim 14 characterised in that each station includes a bistable ($B_{EVT}$), means for complementing the logic state of the bistable between two successive arbitration frames, and means for determining the priority field (PRIO) of each arbitration frame according to the state (EVT) of the bistable and a priority value ($V_{PRIO}$) allocated to the required data traffic.

16. Bus according to claim 15 characterised in that, to make the logic states of the bistables ($B_{EVT}$) of all the stations the same, each station includes means for fixing the state of a field (EVT) of the arbitration frame according to the state of its bistable, for reading the state of the field of the frame sent by the station that has accessed the data channel and for fixing a new state of its own bistable according to the state read.

17. Bus according to any one of claims 13 to 16 characterised in that each arbitration frame (ARB%) includes a repeat field (REP) associated with the priority field and in that each station includes means for modifying the state of the repeat field in the event of collision between stations having the same priority.

FIG.1

FIG.2a

FIG.2b

Voie ARB ____/ARB%A_____/ARB%B_____

Voie DATA ____|____/DATA % A \_/ DATA % A \_/ DATA% A \_/ DATA % B \_

$t_0$   $t_1$   $t_2$   $t_3$

## FIG_3

START \ PRIO 2 - PRIO $\phi$ \ REP \ NUM 6 - NUM $\phi$ \ EVT \

PRIO   NUM

## FIG_4